# EUROPEAN PATENT SPECIFICATION

(11) **EP 1 023 545 B1**
(45) Date of publication and mention of the grant of the patent: **06.02.2008**
(21) Application number: 98953912.7
(22) Date of filing: 22.10.1998
(51) Int. Cl.: F16H 15/26

(54) **CONTINUOUSLY VARIABLE TRANSMISSION**
STUFENLOSES VERSTELLBARES GEHÄUSE
BOITE DE VITESSES A RAPPORTS VARIABLES DE FACON CONTINUE

(30) Priority: 22.10.1997 US 62620 P; 30.12.1997 US 70044 P; 12.08.1998 US 133284
(43) Date of publication of application: 02.08.2000
(73) Proprietor: FALLBROOK TECHNOLOGIES INC., Fallbrook, CA 92028 (US)
(72) Inventor: MILLER, Donald, C., Fallbrook, CA 92028 (US)
(74) Representative: Goddard, Frances Anna
(86) International application number: PCT/US1998/022432
(87) International publication number: WO 1999/020918

(56) References cited:
- GB-A- 592 320
- US-A- 3 237 468
- US-A- 5 236 403
- US-A- 5 318 486

## Description

### Background of the Invention

### Field of the Invention

The field of the invention relates to transmissions. More particularly the invention relates to continuously variable transmissions.

### Description of the Related Art

In order to provide an infinitely variable transmission, various traction roller transmissions in which power is transmitted through traction rollers supported in a housing between torque input and output disks have been developed. In such transmissions, the traction rollers are mounted on support structures which, when pivoted, cause the engagement of traction rollers with the torque disks in circles of varying diameters depending on the desired transmission ratio.

However, the success of these traditional solutions have been limited. For example, in the generic U.S. Patent No. 5,236,403 to Schievelbusch, a driving hub for a vehicle with a variable adjustable transmission ratio is disclosed. Schievelbusch teaches the use of two iris plates, one on each side of the traction rollers, to tilt the axis of rotation of each of the rollers. However, the use of iris plates can be very complicated due to the large number of parts which are required to adjust the iris plates during shifting the transmission. Another limitation of this design is that it requires the use of two half axles, one on each side of the rollers, to provide a gap in the middle of the two half axles. The gap is necessary because the rollers are shifted with rotating motion instead of sliding linear motion. The use of two axles is not desirable and requires a complex fastening system to prevent the axles from bending when the transmission is accidentally bumped, is as often the case when a transmission is employed in a vehicle. Yet another limitation of this design is that it does not provide for an automatic transmission.

Therefore, there is a need for a continuously variable transmission having a simpler shifting method and a single axle. Additionally, there is a need for an automatic traction roller transmission which is configured to shift automatically. Further, the practical commercialization of traction roller transmissions requires improvements in the reliability, case of shifting, function and simplicity of the transmission.

### Summary of the Invention

Aspects of the invention are defined in the accompanying claims.

The present invention includes a transmission for use in rotationally or linearly powered machines and vehicles. For example the present transmission may be used in vehicles such as automobiles, motorcycles, and bicycles. The transmission may, for example, be driven by a power transfer mechanism such as a sprocket, gear, pulley or lever, optionally driving a one way clutch attached at one end of the main shaft.

According to an embodiment of the invention there can be provided a transmission comprising a shaft, a rotatable driving member rotatably mounted on the shaft, a rotatable driven member rotatably mounted on the shaft, a plurality of power adjusters frictionally interposed between the rotatable driving member and the rotatable driven member and adapted to transmit power from the driving member to the driven member, and a rotatable support member located concentrically over the shaft and between the shaft and the power adjusters, and frictionally engaged to the plurality of power adjusters, so that the power adjusters each make three point frictional contact against the driving member, the driven member, and the support member.

According to an embodiment of the invention at least one outwardly extendible weight can be provided, that is coupled to the plurality of power adjusters and rotatably affixed to the shaft. The at least one weight can be adapted to actuate a change in an axis of rotation of the plurality of power adjusters.

### Brief Description of the Drawings

Figure 1 is a partial perspective view of the transmission of the present invention.
Figure 2 is a partial exploded view of the transmission of Figure 1.
Figure 3 is an end cutaway elevational view of the transmission of Figure 1.
Figure 4 is a cutaway side elevational view of the transmission of Figure 1.
Figures 5 and 6 are cutaway side elevational views of the transmission of Figure 1 illustrating the transmission of Figure 1 shifted into different positions.
Figure 7 is an end cutaway view of an alternative embodiment of the transmission of the invention wherein the transmission shifts automatically.
Figure 8 is a side elevational view of the transmission of Figure 7.
Figure 9 is an end cutaway view of an alternative embodiment of the transmission of the invention wherein the transmission includes a stationary hub shell.
Figure 10 is a cutaway side elevational view of the transmission of Figure 9.
Figure 11 is a cutaway side elevational view of an alternative embodiment of the transmission of Figure 1 wherein the transmission has two thrust bearings.
Figure 12 is a cutaway side elevational view of an alternative embodiment of the invention wherein a first and second one way rotatable driver provides an input torque to the transmission.
Figure 13 is a schematic cutaway end elevational view of another alternative embodiment of the transmission of the invention.
Figure 14 is a schematic cutaway front elevational view of the transmission of Figure 13.
Figure 15 is a schematic end view of a housing for the transmission of Figures 13 and 14.
Figure 16 is a schematic cutaway front elevational view of another alternative embodiment of the transmission of the invention.
Figure 17 is a side elevational view of an alternative embodiment of a support member.
Figure 18 is a side elevational view of an alternative embodiment of a support member.
Figure 19 is a side elevational view of an alternative embodiment of a support member.
Figure 20 is a schematic cutaway side elevational view of an alternative embodiment of the invention including: a thrust bearing, a washer, and a tension member.
Figure 21 is a schematic cutaway side elevational view of an alternative embodiment of the invention wherein the support member has at each end a thrust bearing, washer, and the pivot supports have legs.
Figure 22 is a front elevational view of a washer of the transmission of Figure 21.
Figure 23 is a side elevational view of a pivot support of the transmission of Figure 21.
Figure 24 is a bottom plan view of a pivot support of the transmission of Figure 21.
Figure 25 is a front elevational view of an alternative embodiment of a stationary support.
Figure 26 is a cutaway side elevational view of the stationary support of Figure 25.
Figure 27 is a front elevational view of an alternative embodiment of a stationary support.
Figure 28 is a cutaway side elevational view of the stationary support of Figure 27.
Figure 29 is a partial top plan view of the stationary support of Figure 27.
Figure 30 is a front elevational view of an alternative embodiment of a stationary support.
Figure 31 is a cutaway side elevational view of the stationary support of Figure 3 0.
Figure 32 is a cutaway side elevational view of an alternative embodiment of the main shaft of Figure 2.
Figure 33 is a cutaway end elevational view of the shaft of Figure 32.
Figure 34 is a schematic cutaway front elevational view of an alternative embodiment of the transmission of the invention.
Figure 35 is a schematic cutaway side elevational view of an alternative embodiment of the transmission that shifts automatically.
Figure 36 is a schematic cutaway end elevational view of the annular bearing depicted in Figure 35.
Figure 37 is a schematic cutaway side elevational view of an alternative embodiment of the invention having a coasting mechanism.
Figure 38 is a front elevational view of the alternative coasting mechanism of Figure 37.

### Detailed Description of the Invention

The following detailed description is directed to certain specific embodiments of the invention. However, the invention can be embodied in a multitude of different ways as defined and covered by the claims. In this description, reference is made to the drawings wherein like parts are designated with like numerals throughout.

The present invention includes a continuously variable transmission that may be employed in connection with any type of machine that is in need of a transmission. For example, the transmission may be used in (i) a motorized vehicle such as an automobile, motorcycle, or watercraft, (ii) a non-motorized vehicle such as a bicycle, tricycle, scooter, exercise equipment or (iii) industrial power equipment, such as a drill press or power generating equipment, such as a windmill.

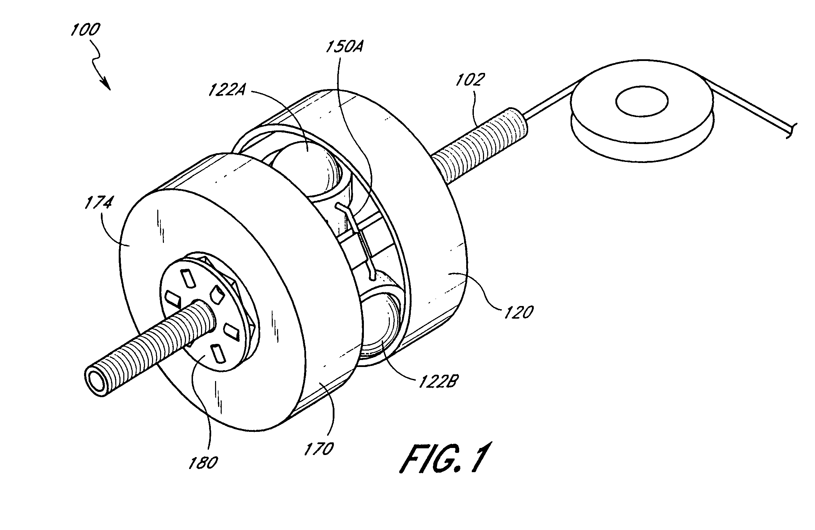

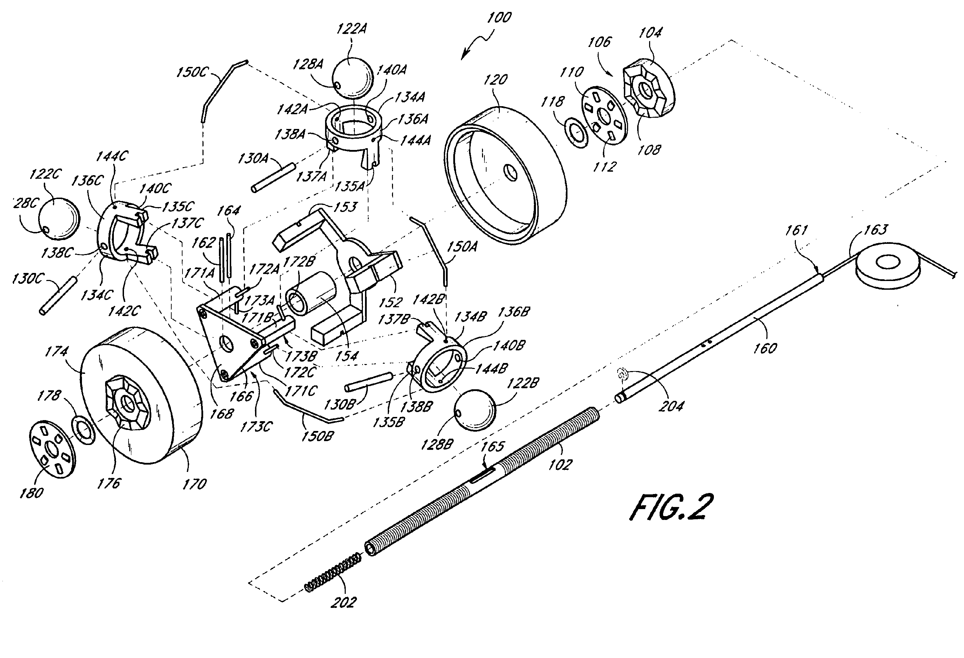

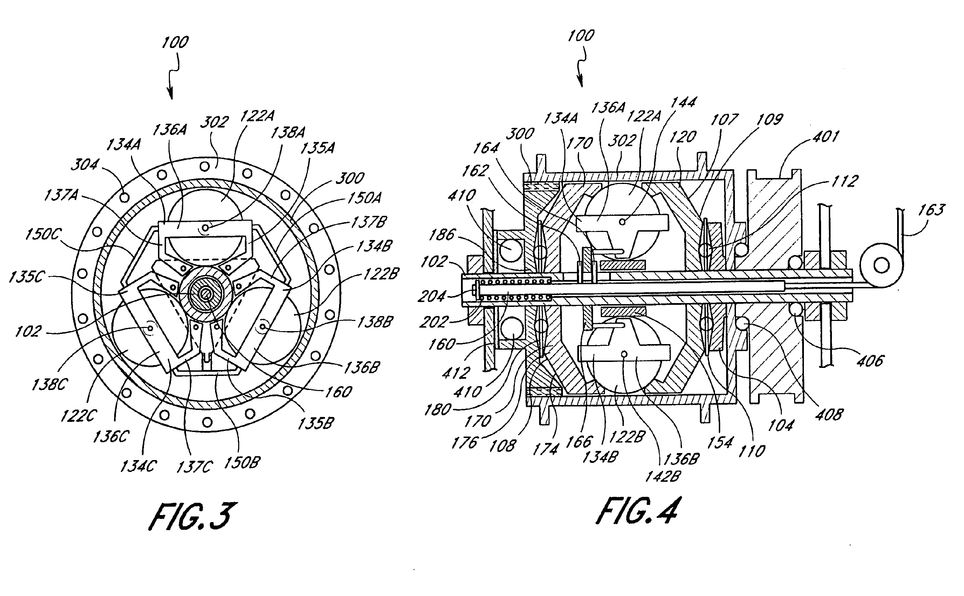

Figures 1 through 4 disclose one embodiment of the present invention. Figure 1 is a partial perspective view of a transmission 100. Figure 2 is an exploded view of the transmission 100 of Figure 1. Figure 3 shows a partial cross sectional end view of the transmission 100. Figure 4 shows a cutaway side elevational view of the transmission 100.

Referring generally to Figures 1 through 4, a hollow main shaft 102 is affixed to a frame of a machine (not shown). The shaft 102 may be threaded at each end to allow a fastener (not shown) to be used to secure the transmission 100 on the main shaft 102 and/or to attach the main shaft 102 to a machine. A rotatable driver 401 (Figure 4) comprising a sprocket or a pulley is rotatably affixed to the main shaft 102, so as to provide an input torque to the transmission 100. A drive sleeve 104 is coaxially coupled to the rotatable driver 401 (Figure 4) and rotatably disposed over the main shaft 102. A surface 106 (Figure 2) of the drive sleeve 104 opposite the rotatable driver 401 (Figure 4), can include a plurality of shallow grooves 108.

A first roller cage assembly 110 is coaxially coupled to the drive sleeve 106 opposite the rotatable driver 401 and also rotatably disposed over the main shaft 102. The first roller cage assembly 110 has a plurality of cylindrical rollers 112 radially arranged about a midpoint of the roller cage assembly 110. Each of the cylindrical rollers 112 are rotatably mounted on the first roller cage assembly 110 such that each of the rollers may rotate about its lengthwise axis. Preferably, a one-to-one correlation exists between each of the shallow grooves 108 and each of the cylindrical rollers 112. Optionally, the cylindrical rollers 112 may be replaced with rollers of an alternative geometric shape, such as with spherical rollers.

A tension inducer 118 (Figure 2), such as a spring, is rotatably disposed over the main shaft 102 and frictionally coaxially coupled to the first roller cage assembly 110 opposite to the drive sleeve 104. Further, a rotatable driving member 120 is rotatably affixed to the main shaft 102 and coaxially coupled to a side of the first roller cage assembly 110 opposite the drive sleeve 104. A surface 107 (Figure 4) of the rotatable driving member 120 opposed to the drive sleeve 104 includes a plurality of shallow grooves 109 (Figure 4). Relative rotation of the roller cage 110 with respect to the drive sleeve 104 causes the cylindrical rollers 112 to roll on the shallow grooves 108, 109 and move the shallow grooves 108, 109 toward or away from each other along the axis of the main shaft 102.

A plurality of spherical power adjusters 122A, 122B, 122C are in frictional contact with a side of the rotatable driving member 120 opposite the roller cage assembly 110. In one embodiment of the invention, the power adjusters 122A, 122B, 122C are spheres made of hardened steel; however, the power adjusters 122A, 122B, 122C may alternatively include other shapes and be manufactured from other materials. A plurality of spindles 130A, 130B, 130C (Figure 2) respectively extend through multiple passages 128A, 128B, 128C (Figure 2) in the power adjusters 122A, 122B, 122C. Radial bearings (not shown) may be disposed over each of the spindles 130A, 130B, 130C (Figure 2) to facilitate the rotation of the power adjusters 122A, 122B, 122C.

A plurality of pivot supports 134A, 134B, 134C respectively hold the spindles 130A, 130B, 130C (Figure 2). The support 134A includes two legs 135A and 137A for connection to a ratio changer 166 which is discussed in further detail below. Similarly, the support 134B includes two legs 135B and 137B, and the pivot support 134C includes two legs 135C and 137C.

The pivot supports 134A, 134B, 134C respectively include pivot rings 136A, 136B, 136C. The pivot ring 136A has four apertures 138A, 140A, 142A, 144A (Figure 2). Similarly, the pivot support 134B has four apertures 138B, 140B, 142B, and 144B, and the pivot support 134C has four apertures 138C, 140C, 142C, and 144C (Figure 2). The apertures 138A, 138B, 138C are respectively located opposite to the apertures 140A, 140B, 140C on the pivot rings 136A, 136B, and 136C. Together, the apertures 138A, 138B, 138C, and the apertures 140A, 140B, 140C are respectively configured to receive the spindles 130A, 130B, 130C (Figure 2).

The apertures 142A, 142B, 142C (Figure 2) are respectively located opposite to the apertures 144A, 144B, 144C (Figure 2) on the pivot rings 136A, 136B, 136C. Together, the apertures 142A, 142B, 142C and the apertures 144A, 144B, 144C are configured to receive multiple immobilizers 150A, 150B, 150C (Figure 2). In one embodiment of the invention, the immobilizers 150A, 150B, 150C are each cylindrical rigid rods, slightly angled at each end. A central portion of each of the immobilizers 150A, 150B, 150C are affixed to one of multiple legs 153 (Figure 2) of a stationary support 152 (Figure 2). The stationary support 152 is fixedly attached to the main shaft 102.

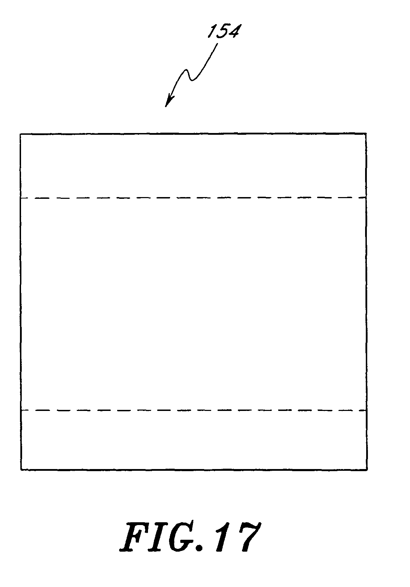

A support member 154 is slidingly and rotatably disposed over the main shaft 102 proximate to a side of the stationary support 152 (Figure 2) which is opposite to the rotatable driving member 120. The support member 154 is in frictional contact with each of the power adjusters 122A, 122B, 122C. In one embodiment of the invention, the support member 154 is a cylindrical ring having a substantially uniform outer circumference from an end cross-sectional view. In another embodiment of the invention, the support member 154 is a cylindrical ring having a first and second flange (not shown) which respectively extend radially outwardly from a first and second end of the support member 154 so as to prevent the power adjusters 122A, 122B, 122C from disengaging from the support member 154. In yet another embodiment of the invention, the support member 154 is a cylindrical ring having a nominally concave outer surface (Figure 17).

The support member 154 may contact and rotate upon the main shaft 102, or may be suspended over the main shaft 102 without substantially contacting it due to the centering pressures applied by the power adjusters 122A, 122B, 122C.

Referring in particular to Figure 2, a shifting member 160, such as an inflexible rod, is slidingly engaged to an inner passage of the main shaft 102. Two extensions 162, 164 perpendicularly extend from the shifting member 160 through an opening 165 in the main shaft 102. A first end 161 of the shifting member 160 proximate to the drive side of the transmission 100 is connected to a linkage 163, such as a cable. The linkage 163 is connected at an end opposite to the main shaft 102 to a shifting actuator (not shown). A tension member 202, such as a spring, is connected to a second end of the shifting member 160 by a fastener 204.

Still referring in particular to Figure 2, the extensions 162, 164 connect to the ratio changer 166. The ratio changer 166 includes a planar platform 168 and a plurality of legs 171A, 171B, 171C which perpendicularly extend from a surface of the platform 168 proximate to the support member 154. The leg 171 A includes two linkage pins 172A, 173A. Similarly, the leg 171B includes two linkage pins 172B and 173B, and the leg 171C includes two linkage pins 172C and 173C. The linkage pins 172A, 172B, 172C, and the linkage pins 173A, 173B, 173C are used to couple the ratio changer 166 to each of the pivot supports 134A, 134B, and 134C.

In regard to the coupling of the support 134A and the ratio changer 166, the linkage pin 172A engages an end of the leg 137A of the support 134A opposite the pivot ring 136A, and the linkage pin 172B engages an end of the leg 135A opposite the pivot ring 136A. Further, in regard to the coupling between the pivot support 134B and the ratio changer 166, the linkage pin 173B engages an end of the leg 137B opposite the pivot ring 136B, and the linkage pin 172C engages an end of the leg 135B opposite the pivot ring 136B. Finally, in regard to the coupling between the pivot support 134C and the ratio changer 166, the linkage pin 173C engages an end of the leg 137C opposite the pivot ring 136C, and the linkage pin 173A engages an end of the leg 137B opposite the pivot ring 136C.

Although only three power adjusters 122A, 122B, 122C are disclosed, the transmission 100 of the invention may be configured with fewer (e.g., 2) or more (e.g., 4, 5, 6 or more) power adjusters. Further, the number of legs on the ratio changer 166, the number of legs on the stationary support 152, the number of immobilizers, the number of pivot supports in the transmission may all be correspondingly adjusted according to the number of power adjusters that are employed.

Referring again in general to Figures 1-4, a rotatable driven member 170 is rotatably engaged to the main shaft 102 proximate to the ratio changer 166 (Figure 2). The rotatable driven member 170 is in frictional contact with each of the power adjusters 122A, 122B, 122C. A surface 174 of the rotatable driven member 170 opposite the power adjusters 122A, 122B, 122C, includes a plurality of shallow grooves 176. The rotatable driven member 170 is in frictional coaxial contact with a second tension inducer 178 (Figure 2), such as a spring, and a second roller cage assembly 180 that is similar in design to the roller cage assembly 110. The second tension inducer 178 (Figure 2) and the second roller cage assembly 180 are rotatably disposed over the main shaft 102. A hub driver 186 (Figure 4) is rotatably disposed over the main shaft 102 and coaxially engaged to a side of the second roller cage assembly 180 opposite the rotatable driven member 170. The hub driver 186 (Figure 4) may be affixed to a hub shell 302 (Figures 3 and 4) using any traditional gearing mechanism. In one embodiment of the invention, the hub driver 186 extends proximate to the hub shell 302 and is connected to a one way rotatable driver 300, such as a one way roller clutch. The one way rotatable driver 300 (Figures 3 and 4) is rotatably coupled to the hub shell 302 (Figures 3 and 4).

Note that the power adjusters 122A, 122B, 122C are suspended in tight three-point frictional contact with the drive member 120, the support member 154, and the driven member 170.

The hub shell 302 (Figures 3 and 4) has a plurality of holes 304 (Figure 3) which provide a means for attaching the hub shell 302 to a wheel, propeller or other propulsion means. The hub shell 302 is supported and is free to rotate on the main shaft 102 by means of hub bearings 410 (Figure 4) which fit into slots in the hub driver 186. A washer 412 (Figure 4) is affixed to the main shaft 102 proximate to a side of the hub driver 186 opposite the second roller cage assembly 180 to facilitate the rotation of the hub bearings 410 (Figure 4).

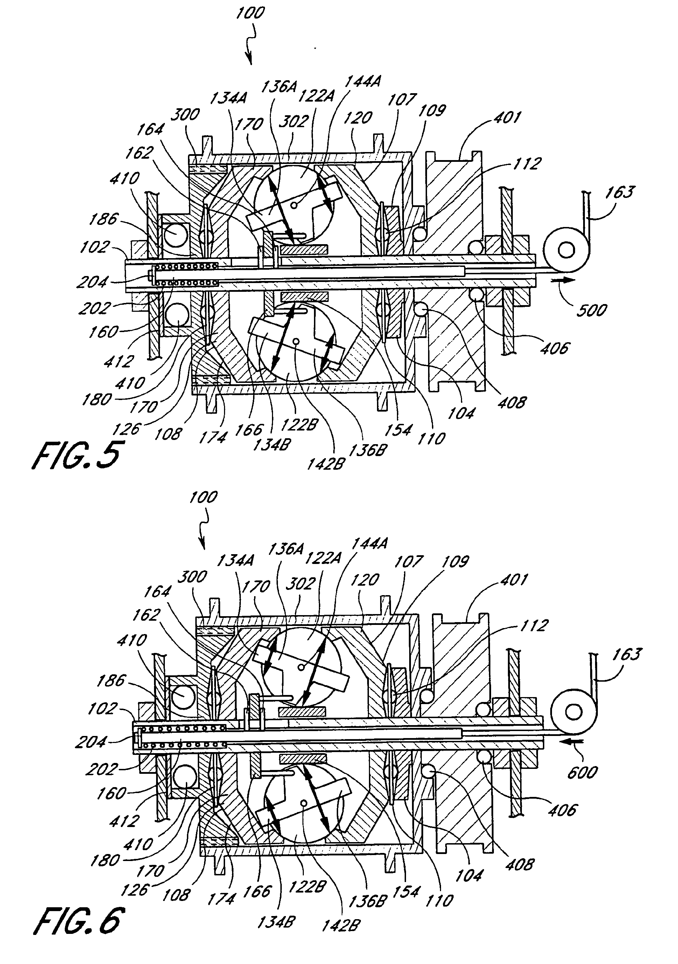

Figures 5 and 6 are a cutaway side elevational views of the transmission of Figure 1 illustrating the transmission of Figure 1 in two different shifted positions. With reference to Figures 5 and 6, a method of shifting the transmission 100 is disclosed below.

Upon an input force, the drive sleeve 104 begins to rotate in a clockwise direction. (It should be noted that the transmission 100 is also designed to be driven in a counterclockwise direction.) At the beginning of the rotation of the drive sleeve 104, nominal axial pressure is supplied by the tension inducers 118, 178 (Figure 2) to ensure that the rotatable driving member 120, the rotatable driven member 170, and the support member 154 are in tractive contact with the power adjusters 122A, 122B, 122C.

The rotation of the drive sleeve 104 in a clockwise direction engages the first roller cage assembly 110 to rotate in a similar direction. At a low torque, the rollers 112 remain centered between the shallow grooves 108, 109 of the rotatable driving member 120 and the drive sleeve 104. As additional torque is applied, the rollers 112 ride up the sloping sides of the grooves 108 and force the drive sleeve 104 and the rotatable driving member 120 farther apart. The same action occurs on the opposite end of the transmission 100 wherein the rotatable driven member 170 engages the hub driver 186 though the second roller cage assembly 180. Thus, the first roller cage assembly 110 and second roller cage assembly 180 compress the rotatable driving member 120 and the rotatable driven member 170 together against the power adjusters 122A, 122B, 122C, which increases the frictional contact of the power adjusters 122A, 122B, 122C against the support member 154, the drive member 120, and the driven member 170.

As the first rotatable driving member 120 is rotated in a clockwise direction by the roller cage assembly 110, the first rotatable driving member 120 frictionally rotates the power adjusters 122A, 122B, 122C. The clockwise rotation of the power adjusters 122A, 122B, 122C causes a clockwise rotation of the rotatable driven member 170. The clockwise rotation of the rotatable driven member 170 engages the second roller cage assembly 180 to rotate in a clockwise direction. In turn, the clockwise rotation of the second roller cage assembly 180 engages the hub driver 186 (Figure 4) to drive in a clockwise direction. The clockwise rotation of the hub driver 186 causes the one way rotatable driver 300 to rotate clockwise. The one way rotatable driver 300 then drives the hub shell 302 (Figures 3 and 4) to rotate in a clockwise direction.

The shifting member 160 is used to modify the axis of a rotation for the power adjusters 122A, 122B, 122C. To shift the transmission 100, the shifting actuator (not shown) slides the shifting member 160 in a first direction 500 (Figure 5). A release in tension of the linkage 163 by the shifting actuator (not shown) causes the shifting member 160 to slide in a second and opposite direction 600 (Figure 6) by the tension member 202. The particular construction of the present transmission 100 provides for much easier shifting than prior art traction roller designs.

When the shifting member 160 is moved in either direction by a user, the extensions 162, 164 engage the ratio changer 166 to axially move across the main shaft 102. Referring to Figure 5, when the shifting member 160 is moved, the ratio changer 166 pivots the supports 134A, 134B, 134C. The pivoting of the supports 134A, 134B, 134C tilts the ball spindles 130A, 130B, 130C and changes the axis of rotation of each of the power adjusters 122A, 122B, and 122C. When the shifting member 160 is moved in the direction 500, the axis of rotation of each of the power adjusters 122A, 122B, 122C is modified such that the rotatable driving member 120 contacts a surface of power adjuster, 120A, 120B, 120C closer to the axis of rotation of the power adjusters 120A, 120B, 120C. Further, the rotatable driven member 170 contacts the power adjuster at a point on a surface of the each of the power adjusters 120A, 120B, 120C further away from the axis of rotation of the power adjusters 120A, 120B, 120C. The adjustment of the axis of rotation for the power adjusters 122A, 122B, 122C increases an output angular velocity for the transmission 100 because for every revolution of the rotatable driving member 120, the rotatable driven member 170 rotates more than once.

Referring to Figure 6, the transmission 100 of the invention is shown in a position which causes a decrease in the output angular velocity for the transmission 100. As the shifting member 160 is directed in the direction 600, opposite the first direction 500, the axis of rotation of each of the power adjusters 122A, 122B, 122C is modified such that the rotatable driven member 170 contacts a surface of each of the power adjusters 122A, 122B, 122C closer to the axis of rotation of each of the power adjusters 122A, 122B, 122C. Further, the rotatable driving member 120 contacts each of the power adjusters 122A, 122B, 122C at a point on a surface of each of the power adjusters 122A, 122B, 122C further away from the axis of rotation of each of the power adjusters 122A, 122B, 122C. The adjustment of the axis of rotation for the power adjusters 122A, 122B, 122C decreases an output angular velocity for the transmission 100 because for every revolution of the rotatable driving member 120, the rotatable driven member 170 rotates less than once.

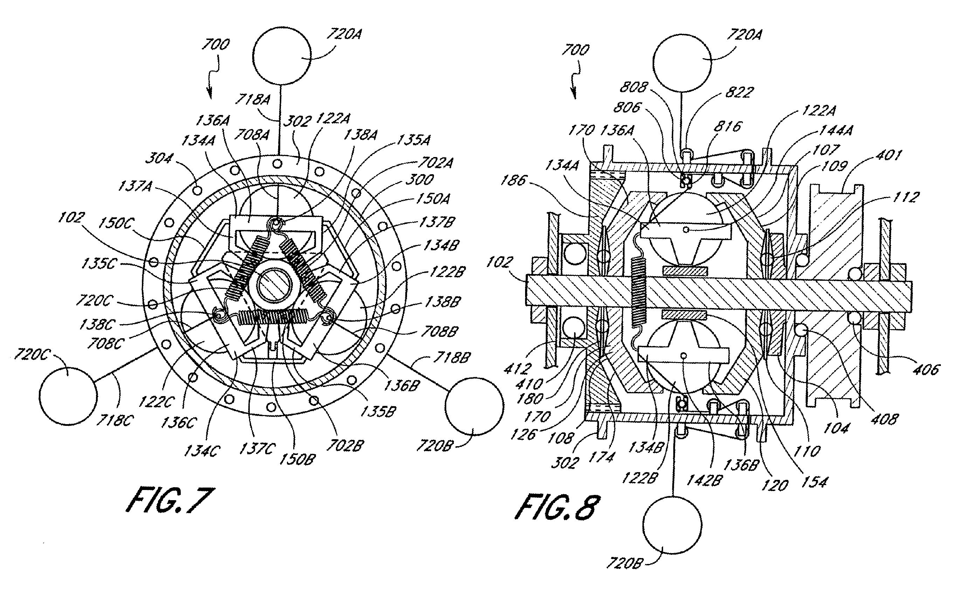

Figures 7 and 8 illustrate an automatic transmission 700 of the present invention. For purposes of simplicity of description, only the differences between the transmission 100 of Figures 1-6 and the automatic transmission 700 are described. Figure 7 is a partial end elevational view of the transmission 700, and Figure 8 is partial side elevational view of the transmission 700.

A plurality of tension members 702A, 702B, 702C, which may each be a spring, interconnect each of the pivot rings 136A, 136B, 136C. The tension member 702A is connected at a first end to the pivot ring 136A and at a second end opposite the first end to the pivot ring 136B. Further, the tension member 702B is connected at a first end to the pivot ring 136B proximate to the aperture 138B and at a second end opposite the first end to the pivot ring 136C proximate to the aperture 138C. Further, the tension member 702C is connected at a first end to the pivot ring 136C proximate to the aperture 138C and at a second end opposite the first end to the pivot ring 136A proximate to the aperture 138A.

The transmission 700 also includes flexible extension members 708A, 708B, 708C respectively connected at a first end to the pivot rings 136A, 136B, 136C. The transmission 700 also includes a first annular bearing 806 and a second annular bearing 816 to assist in the shifting of the transmission 700. The first annular bearing 806 is slidingly attached to the hub shell 302 such that first the annular bearing 806 can further be directed toward the rotatable driving member 120 or the rotatable driven member 170. The second annular bearing 816 also is configured to be slid toward either the rotatable driving member 120 or the rotatable driven member 170; however, the second annular bearing 816 is not rotatable about the main shaft 102, unlike the first annular bearing 806. The first annular bearing 806 and the second annular bearing 816 supports multiple bearing balls 808. A second end of each of the extension members 708A, 708B, 708C connects to the second annular bearing 816 (Figure 8).

Multiple extension members 718A, 718B, 718C respectively connect the first annular bearing 806 to multiple weights 720A, 720B, 720C. Optionally, a plurality of pulleys 822 may be used to route the extension members 718A, 718B, 718C from the first annular bearing 806 to the weights 720A, 720B, 720C, and route the extension members 708A, 708B, 708C to the second annular bearing 816.

Still referring to Figures 7 and 8, a method of operation for the transmission 700 is disclosed. Similar to the embodiment of the invention disclosed in Figure 1, a clockwise input torque causes clockwise rotation of the drive sleeve 104, the first roller cage assembly 110, and the rotatable driving member 120. The rotatable driving member 120 engages the power adjusters 122A, 122B, 122C to rotate, and thereby drives the rotatable driven member 170. The rotation of the rotatable driven member 170 drives the second roller cage assembly 180 and produces an output torque.

However, to be distinguished from the transmission 100 illustrated in Figure 1, the ratio of rotation between the rotatable driving member 120 and the rotatable driven member 170 is adjusted automatically by a centrifugal outward movement of the weights 720A, 720B, 720C. As the weights 720A, 720B, 720C extend outwardly, the extensions 718A, 718B, 718C pull the first annular bearing 806 toward the rotatable driving member 120. The movement of the first annular bearing 806 toward the rotatable driving member 120 similarly causes the movement of the bearings 808 and the second annular bearing 816 toward the rotatable driving member 120.

The movement of the first annular bearing 806 toward the rotatable driving member 120 causes the extension members 708A, 708B, 708C to respectively pivot the pivot rings 306A, 306B, 306C and adjust the axis of rotation of each of the power adjusters 122A, 122B, 122C. After the adjustment, the rotatable driven member 170 contacts a surface of power adjusters 120A, 120B, 120C closer to the axis of rotation of each of the power adjuster 122A, 122B, 122C. Conversely, the rotatable driving member 120 contacts the power adjusters 122A, 122B, 122C at a point on a surface of the each of the power adjusters 122A, 122B, 122C further away from the axis of rotation of the power adjusters 122A, 122B, 122C. The adjustment of the axis of rotation for the power adjusters 122A, 122B, 122C decreases an output angular velocity for the transmission 100 because for every revolution of the rotatable driving member 120, the rotatable driven member 170 rotates less than once. When the hub shell 302 rotates more slowly, the compression members 702A, 702B, 702C adjust the axis of rotation of the power adjusters 122A, 122B, 122C to provide to a lower output angular velocity in comparison to the input angular velocity.

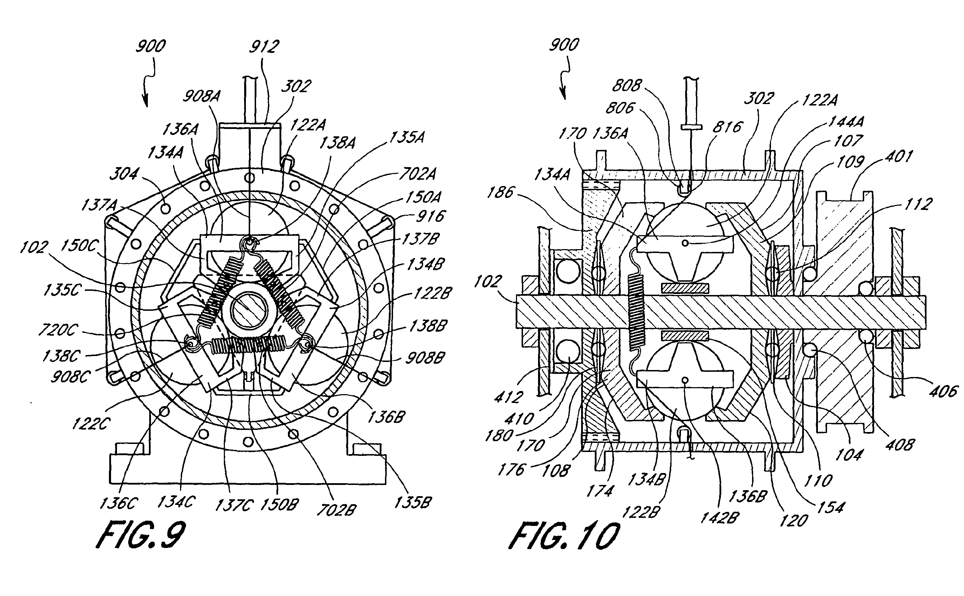

Figures 9 and 10 illustrate an alternative embodiment of the invention. For purposes of simplicity of description, only the differences between the transmission 100 of Figures 1 and a transmission 900 of Figures 9 and 10 are described. Figure 9 is a partial end elevational view of the transmission 900, and Figure 10 is partial side elevational view of the transmission 900.

The transmission 900 includes flexible extension members 908A, 908B, 908C respectively connected at a first end to the pivot rings 136A, 136B, 136C. A second end of the extension members 908A, 908B, 908C connects to a synchronization member 912. Further each of the extension members 908A, 908B, 908C are slidingly engaged to a plurality of pulleys 916 (Figure 9) which are affixed to the hub shell 302. It is noted that the number and location of the each of the pulleys 916 (Figure 9) may be varied. For example, a different pulley configuration may be used to route the extension members 908A, 908B, 908C depending on the selected frame of the machine or vehicle that employs the transmission 900. Additionally, the pulleys 916 and extension members 908A, 908B, 908C may be located inside the hub shell 302.

The hub shell 302 of the transmission 900 is non-rotational. Further, the hub shell 302 includes a plurality of apertures (not shown) which are used to guide the extension members 908A, 908B, 908C to the synchronization member 912.

To be noted, according to the embodiment of the invention illustrated in Figures 9 and 10, the shifting assembly of the transmission 100 of Figure 2 may be eliminated, including the main shaft 102 (Figure 2), the tension member 202 (Figure 2), the extensions 162, 164 (Figure 2) and the shifting actuator (not shown).

Still referring to Figures 9 and 10, a method of operation for the transmission 900 is disclosed. Similar to the embodiment of the invention disclosed in Figure 1, an input torque causes a clockwise rotation of the drive sleeve 104, the first roller cage assembly 110, and the rotatable driving member 120. The rotatable driving member 120 engages the power adjusters 122A, 122B, 122 to rotate, and thereby drive the rotatable driven member 170. The rotation of the rotatable driven member 170 drives the second roller cage assembly 180 and produces an output torque.

In the transmission 900, the ratio of rotation between the rotatable driving member 120 and the rotatable driven member 170 is adjusted by the manipulation of the synchronization member 912. As the synchronization member 912 is outwardly directed from the hub shell 302, the extension members 908A, 908B, 908C respectively pivot the pivot rings 136A, 136B, 136C such that the axis of rotation of each of the power adjusters 122A, 122B, and 122C is similarly pivoted. The axis of rotation of each of the power adjusters 122A, 122B, 122C is modified such that the rotatable driving member 120 contacts a surface of power adjusters 122A, 122B, 122C further away from the axis of rotation of each of the power adjusters 122A, 122B, 122C. Conversely, the rotatable driven member 170 contacts the power adjusters 122A, 122B, 122C at a point on a surface of the each of the power adjusters 122A, 122B, 122C closer to the axis of rotation of each of the power adjusters 122A, 122B, 122C. The adjustment of the axis of rotation for the power adjusters 122A, 122B, 122C decreases an output angular velocity for the transmission 100 because for every revolution of the rotatable driving member 120, the rotatable driven member 170 rotates less than once.

When the synchronization member 912 is directed toward the hub shell 302, the tension members 702A, 702B, 702C compress. This compression causes an end of the pivot rings 136A, 136B, 136C proximate to the rotatable driven member 170 to pivot toward the main shaft 102. The pivoting of the pivot rings 136A, 136B, 136C causes the axis of rotation of each of the power adjusters 122A, 122B, 122C to be modified such that the rotatable driven member 170 rotates slower than the rotatable driving member 120.

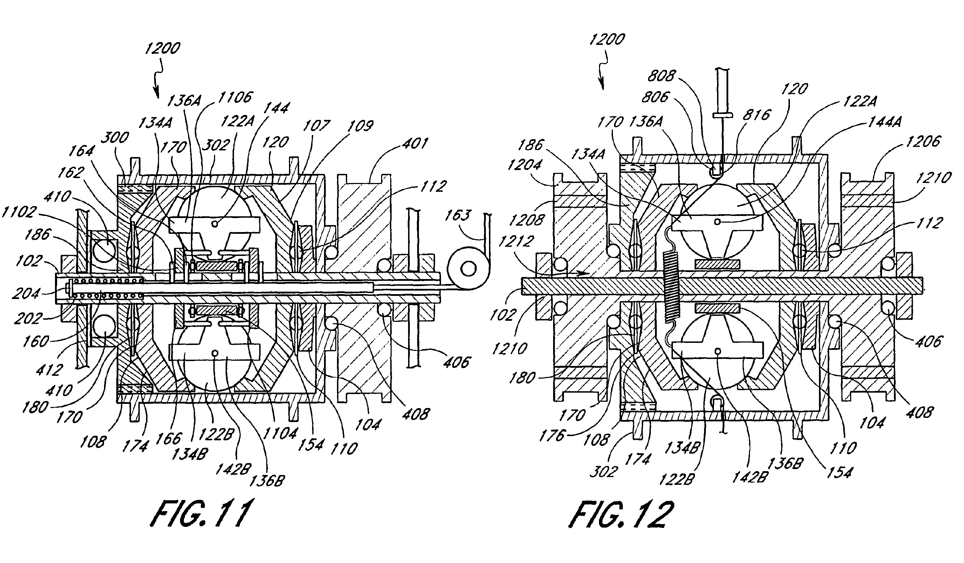

Figure 11 illustrates another alternative embodiment of the invention including a transmission 1100 having a first thrust bearing 1106 and a second thrust bearing 1108. The first thrust bearing 1106 is rotatably disposed over the main shaft 102 and is positioned between the support member 154 and the extensions 162, 164. The second thrust bearing 1108 is disposed over the main shaft 102 on a side of the support member 154 opposite the first thrust bearing 1106. The transmission 1100 may optionally also include a second ratio changer, such as ratio changer 1110, which is disposed over the main shaft 102 and is axially slidable.

When the ratio changers 166, 1110 slide axially to cause a shift in the transmission 1100, the ratio changers 166, 1110 also slide the thrust bearings 1106, 1108. The sliding of the thrust bearings 1106, 1108 forces the support member 154 to slide in unison with the ratio changers 166, 1110. A small amount of play is provided between the support member 154 and the thrust bearings 1106, 1008 so that the thrust bearings 1106, 1108 do not contact the support member 154 except when the transmission 1100 is in the process of shifting.

Figure 12 illustrates an alternative embodiment of the invention. Figure 12 illustrates a transmission 1200 that operates similarly to the embodiment of the invention disclosed in Figure 10; however, the transmission 1200 of Figure 12 includes two rotatable drivers 1204, 1206 and a rotatable driving shaft 1212. The rotatable driving shaft 1212 is fixedly attached to the drive sleeve 104.

Still referring to Figure 12, the first rotatable driver 1204 includes a one way clutch 1208 that is configured to rotate the rotatable driving shaft 1212 upon the rotation of the rotatable driver in a first direction. The second rotatable driver 1206 includes a one way clutch 1210. The second rotatable driver 1206 is configured to engage the drive sleeve 104 upon the rotation of the second rotatable driver 1206 in a second direction, which is opposite to the activation direction of the first rotatable driver 1204. The second rotatable driver 1206 is fixedly attached to the drive sleeve 104.

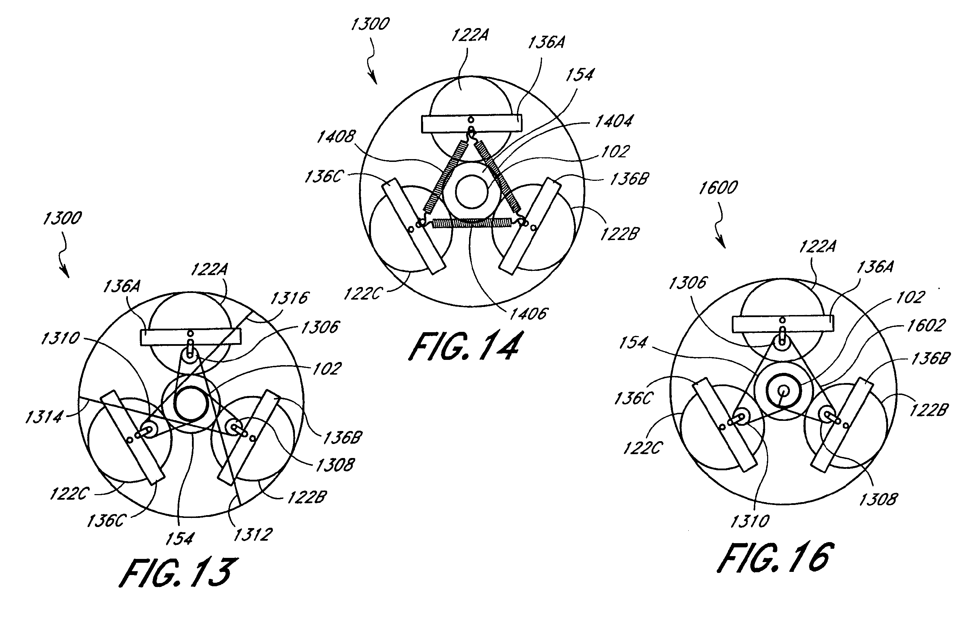

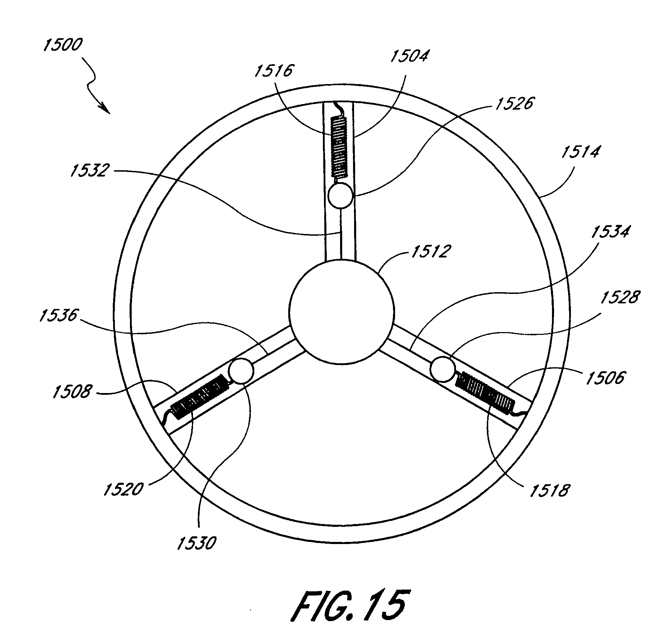

Figure 13 schematically illustrates another alternative embodiment of the invention having a transmission 1300 that is configured to shift automatically. Three pulleys 1306, 1308, 1310 are respectively connected to the pivot rings 136A, 136B, and 136C. A cable 1312 is guided around the pulley 1306 and connects at a first end to the main shaft 102 and connects at a second end to an annular ring (not shown), similar to the annular ring 816 of Figure 8. Similarly, a cable 1314 is guided around the pulley 1308 and connects to the main shaft 102 at a first end and connects at a second end to the annular ring (not shown). Lastly, a cable 1316 is guided around the pulley 1310 and connects at a first end to the main shaft 102 and connects at a second end to the annular ring (not shown).

Figure 14 schematically illustrates the transmission 1300 of Figure 13 from a front end. A plurality of tension members 1404, 1406, 1408 interconnect each of the pivot rings 136A, 136B, and 136C. The tension member 1404 connects at a first end to the pivot ring 136A and connects at a second end opposite the first end to the pivot ring 136B. The tension member 1406 connects at a first end to the pivot ring 136B and connects at a second end opposite the first end at the pivot ring 136C. The tension member 1408 connects at a first end to the pivot ring 136A and connects at a second end opposite the first end at the pivot ring 136C.

Figure 15 schematically illustrates a housing 1500 for the transmission 1300 of Figures 13 and 14. The housing 1500 includes three hollow guide tubes 1504, 1506, and 1508. Each of the hollow guide tubes 1504, 1506, 1508 connect at a first end to a hub shell 1512 that holds the transmission 1300 and at a second end opposite the first end to a transmission wheel 1514. Three tension members 1516, 1518, 1520 are respectively disposed within the guide tubes 1504, 1506, 1508 and are connected at a first end to the transmission wheel 1514. A second end of the tension members 1516, 1518, 1520 opposite the transmission wheel 1514 are respectively connected with spherical weights 1526, 1528, 1530. In alternative embodiments of the invention, the weights 1526, 1528, 1530 may be adapted to other geometric shapes.

Multiple linkage members 1532, 1534, 1536, respectively extend from the weights 1526, 1528, 1530 to an annular member (not shown), such as the annular member 806 of Figure 8.

Turning to the method of operation of the housing 1500 of Figure 15, the rotation of the hub shell 1512 causes the rotation of the hollow guide tubes 1504, 1506, 1508. As the guide tubes 1504, 1506, 1058 rotate, the weights 1526, 1528, 1530 extend outwardly toward the transmission wheel 1514. The outward movement of the weights 1526, 1528, 1530 causes a shifting of the axis of rotation of the power adjusters 122A, 122B, 122C of Figures 13 and 14.

Figure 16 is another alternative embodiment of the invention. Figure 16 is a schematic illustration of a manual version of the transmission 1300 shown in Figures 13 and 14. For purposes of simplicity of description, only the differences between the transmission 1600 of Figure 16 and the transmission 1300 of Figures 13 and 14 are described. The transmission 1600 includes a flexible cable 1602 that connects at a first end to a shifting actuator (not shown). The cable 1602 extends from the shifting actuator (not shown), through the central passageway of the main shaft 102 and then extends through an aperture (not shown) on the main shaft 102. From the aperture (not shown) the cable 1602 extends around the pulley 1308. From the pulley 1308, the cable is guided around the pulley 1306. From the pulley 1306, the cable extends to the pulley 1308. Finally, from the pulley 1308, the cable 1602 connects to the main shaft 102.
Still referring to Figure 16, as the cable 1602 is directed toward the shifting actuator (not shown), the cable 1602 pulls on the pulleys 1304, 1306, 1308 thereby causing a shift in the axis of rotation of each of the power adjusters 122A, 122B, 122C. Conversely, when the shifting actuator (not shown) releases the cable 1602, the tension members 1404, 1406, 1408 cause each of the axis of rotation of the power adjusters 122A, 122B, 122C to shift in a second and opposite direction. Referring to Figures 17-19, three alternative embodiments of the support member 154 are disclosed. In Figure 17, the support member 154 is a cylindrical ring having a nominally concave outer surface.

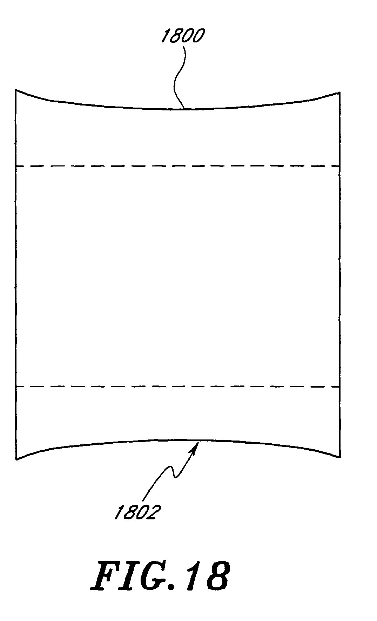

In Figure 18, the circumference of the support member 1800 is the narrowest near a mid-point 1802 of the support member. From the midpoint, the outer circumference of the support member 154 increases up to each of the ends of the support member 154. It is noted that the slope created by the outer surface of the support member 154 gradually increases from being horizontal, relative to its longitudinal axis, at the midpoint 1802 to about a 30 degrees angle at each of the ends of the support member 154. The shape of the support member 1800 allows for axial movement of the support member 1800, thereby aiding in the ease of shifting of the transmission and also preventing the support member 154 from becoming dislocated at either of its ends during shifting.

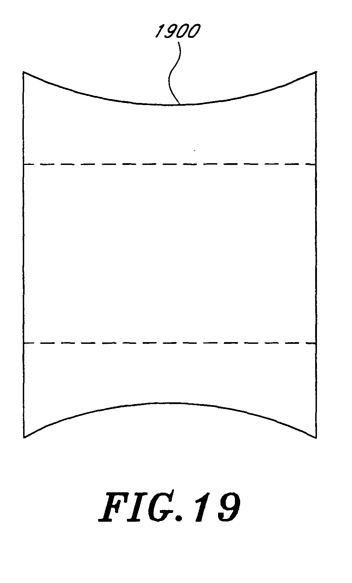

Figure 19 depicts a support member 1900 having a concave outer surface. The shape of the support member 1900 prevents the support member 1900 from wandering across the main shaft 102 while the transmission 100 is in use.

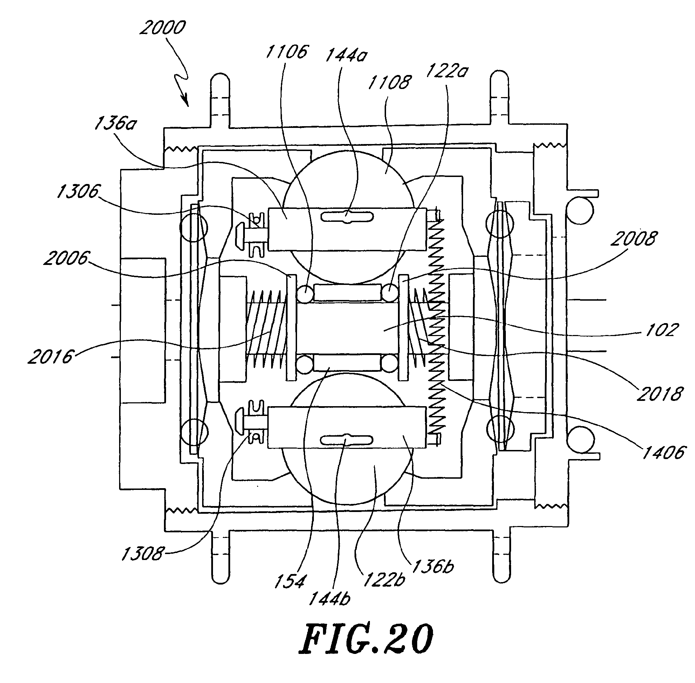

Figure 20 illustrates an alternative embodiment of the of the present invention. The first thrust bearing 1106 is rotatably disposed over the main shaft 102 and is positioned between the support member 154 and a first thrust washer 2006. The second thrust bearing 1108 is disposed over the main shaft 102 on a side of the support member 154 opposite the first thrust bearing 1106. The second thrust bearing 1108 is positioned between the support member 154 and a second thrust washer 2008. The second thrust washer 2008 is operably connected to a tension inducer 2018. The tension inducer 2018 provides a force that returns the support member 154 to its neutral position when the transmission 2000 is not shifting. Opposite the second thrust washer 2008, the tension inducer 2018 may be secured to the main shaft 102, the stationary support 152 (not shown), or other component of the transmission 2000.

A first end of a tension inducer 2016 contacts the first thrust washer 2006. The other end of the tension inducer 2016 may be secured to the main shaft 102, the stationary support 152 (Figure 2), or other component of the transmission 2000. Preferably, to minimize friction, a small amount of play is allowed between the first thrust bearing 1106, the second thrust bearing 1108, and the support member 154.

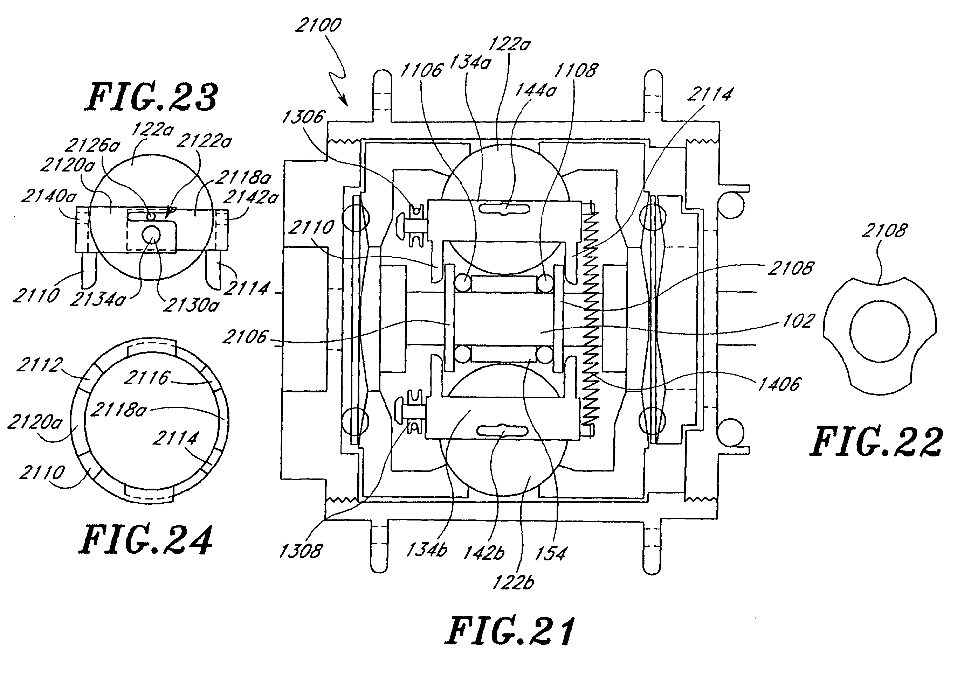

Figure 21 illustrates an alternative embodiment of the invention using the first thrust bearing 1106 (also shown in Figure 11) and the second thrust bearing 1108 (also shown in Figure 11). The first thrust bearing 1106 is rotatably disposed over the main shaft 102 and is positioned between the support member 154 and a first thrust washer 2106. The second thrust bearing 1108 is disposed over the main shaft 102 and positioned between the support member 154 and a second thrust washer 2108. Each of the pivot supports 134A, 134B, 134C have four extensions 2110, 2112 (Figure 24), 2114, 2116 (Figure 24) that are adapted to interface with the support ring 154. The extensions 2110, 2112, 2114, 2116 of the pivot supports 134A, 134B, 134C are adapted to direct the support member 154 such that it is constantly positioned underneath the power adjusters 122A, 122B, 122C during the operation of the transmission. The first thrust washer 2106 is positioned between the first thrust bearing 1106 and the extensions 2110, 2112, 2114, 2116 of the pivot supports 134A, 134B, 134C. Preferably, to minimize friction, a small amount of play is allowed between the first thrust bearing 1106, the second thrust bearing 1108, and the support member 154.

Figure 22 shows a front elevational view of the thrust washer 2108 of the transmission 2100 of Figure 21. The thrust washer 2108 has a plurality of grooves on its outer edge to prevent the second thrust washer 2108 from contacting the power adjusters 122A, 122B, 122C during shifting.

Figures 23 and 24 show an exemplary pivot support, such as is shown in Figure 21, wherein the pivot support is made of a two-part construction. Figure 23 is a side elevational view of the pivot support and Figure 24 illustrates a bottom plan view of the pivot support.

To form the pivot support of Figures 23 and 24, a first pivot support part 2120A and a second pivot support part 2118A are pressed together. The first pivot support 2120A and the second pivot support part 2118A are each roughly semi-cylindrical in shape from a top plan view. The first pivot support part 2120A includes the extensions 2112 and 2110 (Figure 24). Further, the second support part 2118A includes the extensions 2116 and 2114 (Figure 24).

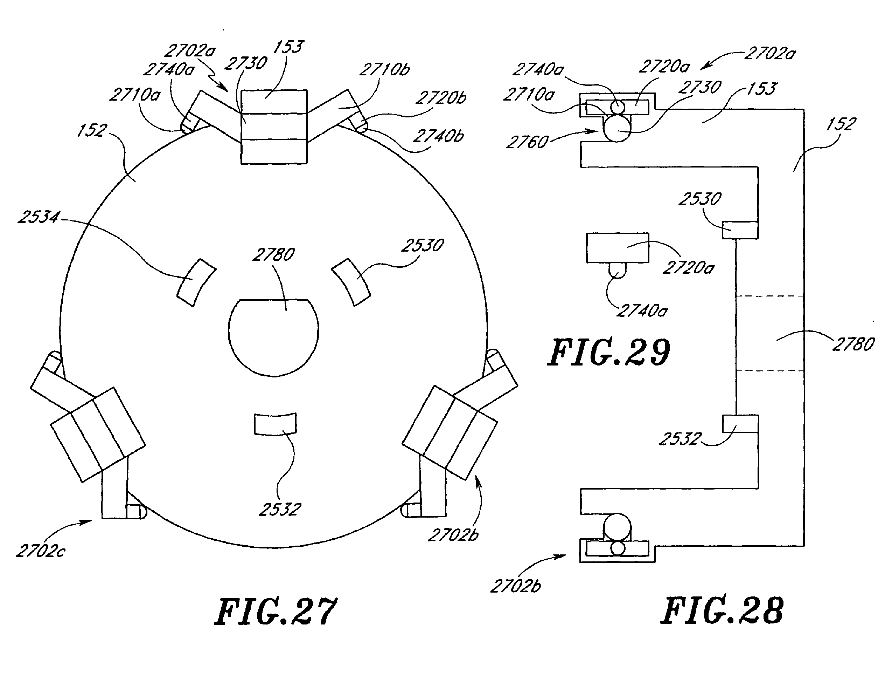

The first pivot support part 2118A and second pivot support part 2120A may be fastened together by one of any number of traditional fastening techniques. For example, indentations 2130A may be formed on the second pivot support part 2120A and indentation 2134A may be formed on the second pivot support part 2118A such that the pivot support part 2120A and the pivot support part 2118A may be snap-fit together. Grooves 2122A on the first pivot support part 2120A are designed to allow for the cross-connection of each of the pivot supports in the transmission, such as by an interconnecter 2720 (Figure 27).

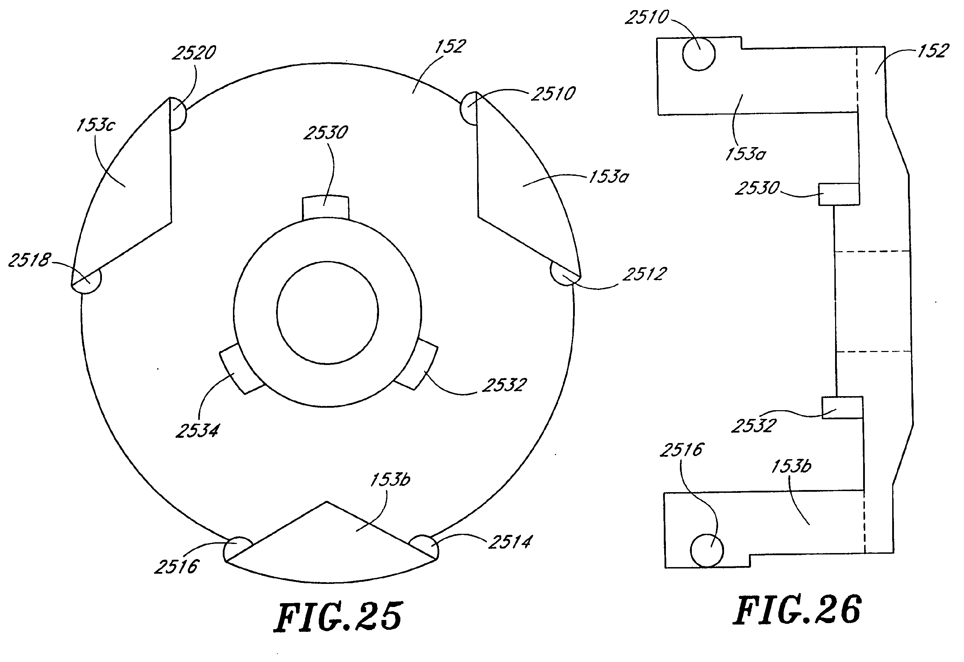

Figures 25 and 26 illustrate an alternative embodiment of the stationary support 152. The stationary support 152 has a plurality of immobilizers 2510, 2512, 2514, 2516, 2518, and 2520. The immobilizers 2510, 2512, 2514, 2516, 2518, and 2520 may optionally be formed as an integral part of the legs 153 of the stationary support 152. The stationary support 152 further includes pivot stops 2530, 2532, and 2534 that are radially arranged about a midpoint of the stationary support 152. The pivot stops 2530, 2532, 2534 prevent the pivot supports 134A, 134B, 134C from rotating too far and hitting the rotatable driven member 170 and/or the rotatable driving member 120.

Figures 27, 28 and 29 illustrate yet another embodiment of the stationary support 152. Each leg 153 of the stationary support 152 has a groove 2760 that is configured to receive one of three immobilizers 2702A, 2702B, 2702C. Each immobilizer 2702A, 2702B, 2702C includes a swivel 2730 which fits into the groove 2760. The groove 2760 has a radius equal to or slightly larger than the radius of the swivel 2730. The swivel 2730 is of a cylindrical or spherical design allowing it to rotate in the groove 2760. The ends of the swivel 2730 are respectively connected to an angular support 2710A and an angular support 2710B. The angular support 2710A and the angular support 2710B are respectively connected, opposite the groove 2760, to the interconnecters 2720A, 2720B. The interconnectors 2720A, 2720B connect to the pivot supports 134A, 134B, 134C, thereby anchoring the pivot supports 134A, 134B, 134C to the stationary support 152 and also insuring that all the pivot supports 134A, 134B, 134C rotate in unison. The interconnecters 2720A and 2720B fit into the grooves 2122A (Figure 23) of the first pivot support part 2120 or the apertures 142, 144 (Figure 21) of the pivot supports 134A, 134B, 134C.

The interconnecters 2720A and 2720B are respectively attached, at an end opposite the angular supports 2710A and 2710B, to pivot members 2740A and 2740B. The pivot members 2740A and 2740B are respectively inserted into the apertures 142, 144 of each of the pivot supports 134A, 134B, 134C thereby providing a pivot for each of the pivot supports 134A, 134B, 134C.

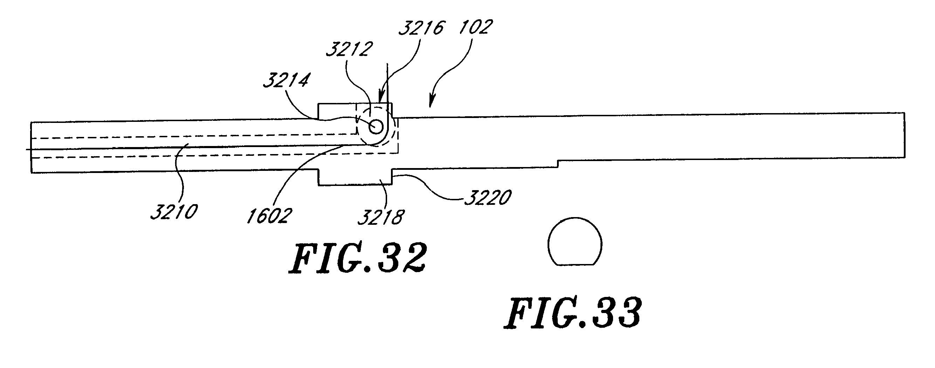

In one embodiment of the invention, the main shaft 102 may be adapted to mate with the stationary support 152 in such a manner as to prevent the stationary support 152 from rotating about the main shaft 102. For example, in the embodiment of the invention disclosed in Figure 27, a flat edged aperture 2780 in the center of the stationary support 152 prevents the stationary support 152 from rotating. An exemplary main shaft 102 having an adapted outer diameter is shown in Figures 32 and 33. Further, the flat edged aperture 2780 enables the quick assembly of the stationary support 152 to the shaft 102. Alternatively, the stationary support 152 can be affixed to the main shaft 102 by traditional means.

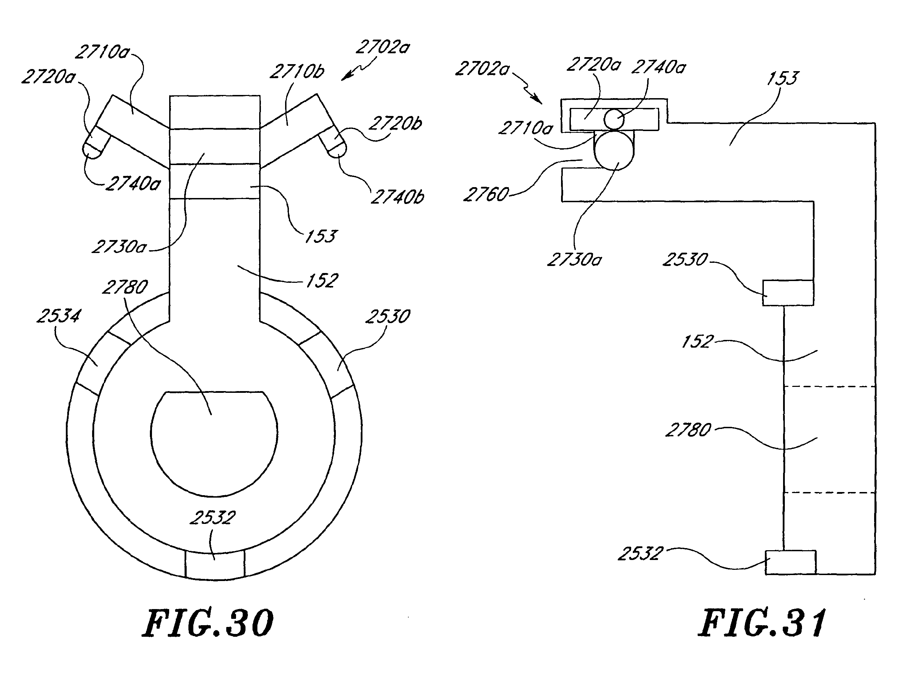

Figures 30 and 31 illustrate an alternative embodiment of the stationary support 152 of Figures 27-29. The stationary support 152 has one leg 153. In this embodiment, the immobilizer 2702B (Figure 27) and the immobilizer 2702C (Figure 27) are adapted to be directly connected to the other pivot supports 134A, 134B, 134C in the transmission. Since the immobilizer 2702A is anchored to the main shaft 102, each of the power adjusters 122A, 122B, 122C are also anchored to the main shaft 102 through their connection to the immobilizer 2702A. Advantageously, the use of one only one leg 153 reduces manufacturing costs over those embodiments of the invention having multiple legs.

Figures 32 and 33 illustrate an alternate embodiment of the main shaft 102. The main shaft 102 of Figures 32 and 33 may used in conjunction with various embodiments of the invention including the transmission 1600 (shown in Figure 16). At least one flexible cable 1602 positioned within the main shaft 102, passes around a pulley 3212, through a hole 3210 and exits the main shaft 102 at one end. A fastener 3214, such as a bolt or pin, secures the pulley 3212 in position. The main shaft 102 has a slot 3216 that allows the pulley 3212 to be easily inserted into the main shaft 102 during manufacture. Optionally, the main shaft 102 may be strengthened in the area of the pulley 3212 by increasing the size of the shell of the main shaft 102. Further, the main shaft 102 can be adapted to define a pivot stop 3218 for the pivot supports 134A, 134B, 134C. The pivot stop 3218 acts to prevent the pivot supports 134A, 134B, 134C from pivoting too far during shifting and hitting the rotatable driving member 120 and/or the rotatable driven member 170. Also, a flange 3220 of the pivot stop 3218 can be used to prevent the support member 154 (Figure 2) from moving too far axially. Further, a tension inducer 2016 (Figure 20), such as a spring may be positioned against the flange 3220, to help keep the support member 154 centrally positioned underneath the power adjusters 122A, 122B, 122C.

Figure 33 shows a cross section of the main shaft 102 having a flat area formed on the main shaft 102 to allow the flat edged hole 2780 of the stationary supports 152 depicted in Figures 27-31 to be quickly assembled onto the main shaft 102. However, the shape of the main shaft 102 and the stationary support 154 may adapted into other mating configurations.

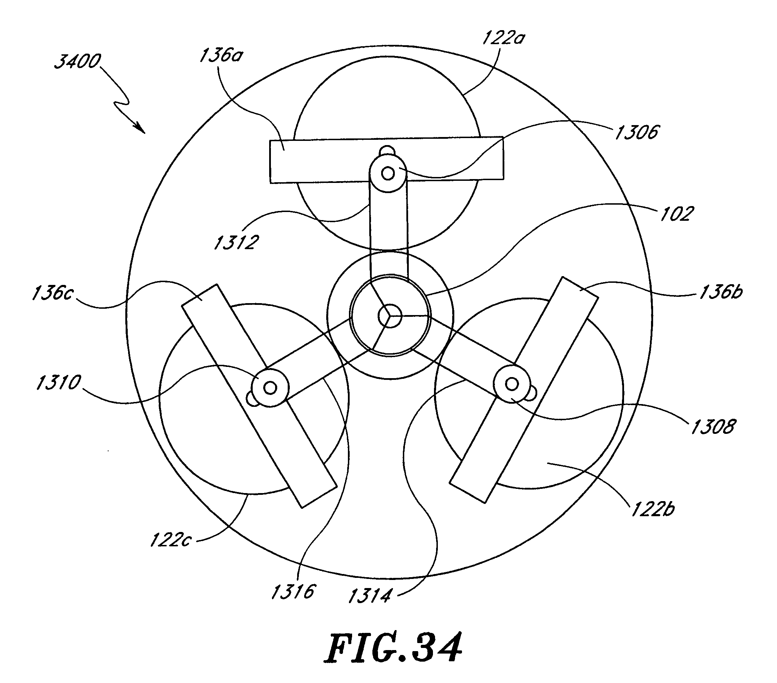

Figure 34 illustrates yet another alternative embodiment of the invention. Figure 34 is a schematic illustration of a manual version of the transmission 1300 shown in Figures 13 and 14. For purposes of simplicity of description, only the differences between the transmission 3400 of Figure 34 and the transmission 1300 of Figure 13 are described. The transmission 3400 includes three flexible cables 1312, 1314, and 1316 which differ from the transmission 1300 in that the second end of the cables extend through three apertures (not shown) on the main shaft 102 and enter the central passageway of the main shaft 102. The three flexible cables 1312, 1314, and 1316, then extend through one end of the main shaft 102 and end at a conventional shifting actuator.

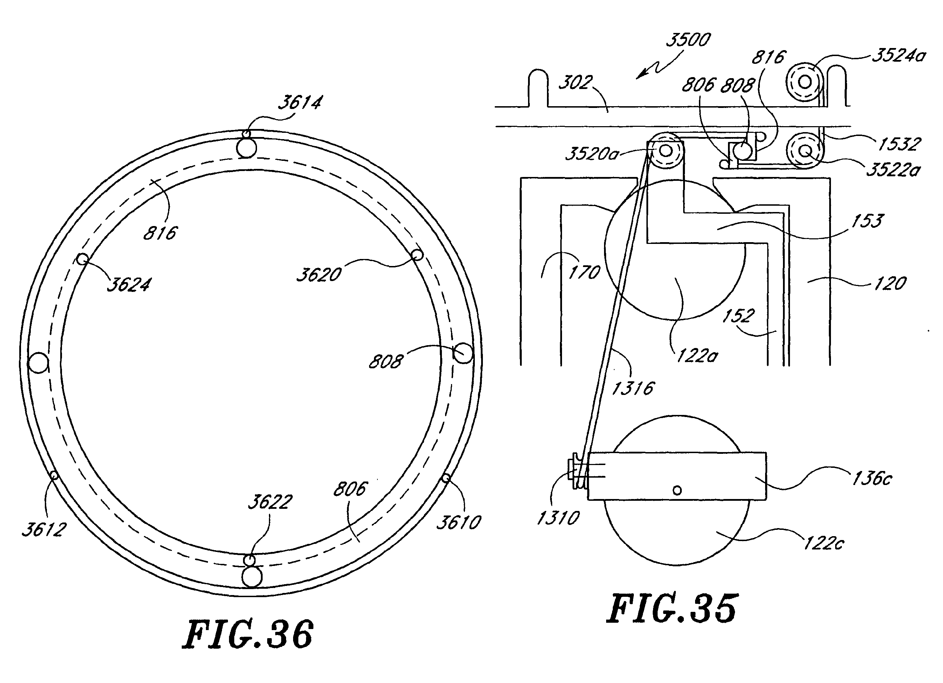

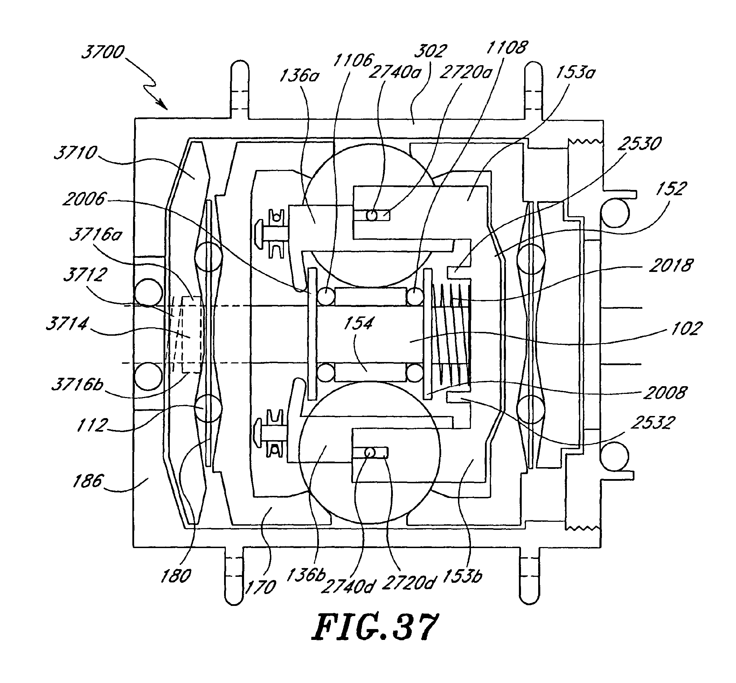

Figure 35 illustrates yet another alternative embodiment of the invention. Figure 35 is a schematic cutaway side elevational view of a transmission 3500 that shifts automatically. Figure 36 is a schematic cutaway end elevational view of the annular bearing of the transmission 3500 of Figure 35. The features of the transmission 3500 depicted in Figures 35 and 36 may be used in conjunction with the features illustrated in Figures 13-15.

The transmission 3500 includes multiple identically configured cable assemblies, one for each of the power adjusters 122A, 122B. 122C. However, for purposes of simplicity of description, only one of the cable assemblies will be explained. The flexible cable 1316 is attached at a first end to the main shaft 102 (not shown). From the main shaft 102, the flexible cable 1316 travels around the pulley 1310, and continues to pulley 3 520A, attached to one of the legs 153 of the stationary support 152. After wrapping around the pulley 3520A, the flexible cable 1316 passes through the aperture 3614 (Figure 36) and terminates by attaching to the second annular bearing 816. The second annular bearing 816 is stationary and does not rotate.

From a first end that is attached to the first annular bearing 806, the flexible cable 1532 passes through aperture 3624 and travels to a pulley 3522A From the pulley 3522A, the cable 1532 passes through an aperture (not shown) in the hub shell 302 to the pulley 3524A.

In the embodiment of the invention shown in Figure 35, the first annular bearing 806 rotates with the hub shell 302. The rotation of the first annular bearing 806 is facilitated by ball bearings 808 that are situated between the first annular bearing 806 and the second annular bearing 816. From the pulley 3524A, a flexible cable 1532 may pass around one or more other pulleys (not shown) or continue directly to and attach to the weight 1526 (shown in Figure 15).

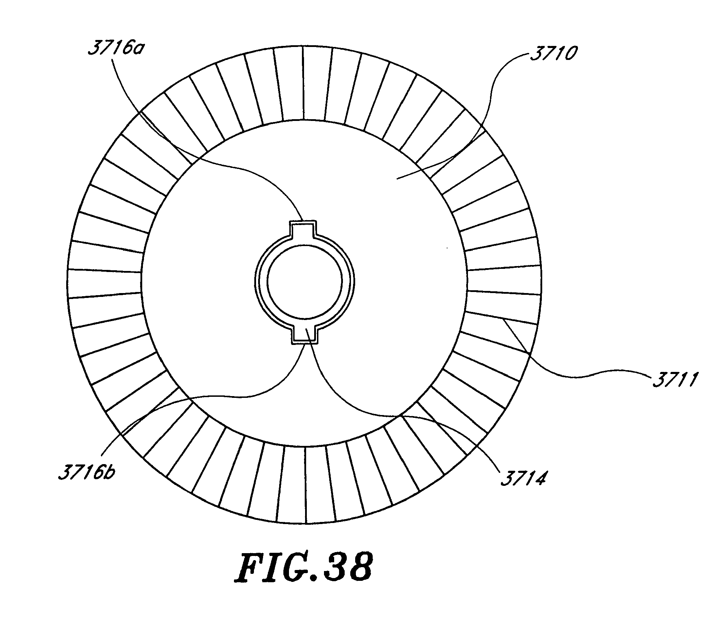

Figures 37 and 38 illustrate an alternative embodiment of the transmission 3700 including a coasting mechanism 3710. The coasting mechanism 3710 can be used in connection with bicycles, motorcycles, automobiles and machinery where disengaging the transmission is desired. The coasting mechanism 3710 is positioned between the hub driver 186 and the second roller cage assembly 180. When torque is applied to the rotatable driven member 170, the second roller cage assembly 180 responds by rotating in the same direction as the rotatable driven member 170. The rollers 112 roll up the shallow grooves of the rotatable driven member 170. The action of the rollers 112 causes the coasting mechanism 3710 to be directed toward the hub driver 186. The coasting mechanism 3710 does not rotate with the rotatable driven member 170 because two slots 3716A and 3716B in the coasting mechanism 3710 engage a clutch ring 3714. The clutch ring 3714 is frictionally attached to the main shaft 102 and has two prongs which extend into the two slots 3716A and 3716B of the coasting mechanism 3710. The coasting mechanism 3710 touches the hub driver 186 creating friction between the coasting mechanism 3710 and the hub driver 186. Notches 3711 may be cut on the beveled area of the coasting mechanism 3710 to increase friction. The friction causes the rollers 112 to continue to roll up the sides of the shallow grooves of the rotatable driven member 170 and the coasting mechanism 3710 until sufficient force is applied against the hub driver 186 that it binds and rotates with the coasting mechanism.

The clutch ring 3714, then rotates with the coasting mechanism 3710. When torque is released, a clutch tension inducer 3712 pushes the coasting mechanism 3710 away from the hub driver 186, disengaging the coasting mechanism 3710 from the hub driver 186 and allowing the hub driver 186 and hub shell 302 to continue rotating.

Still referring to Figure 37, an alternative shifting method is described for the transmission 3700. For purposes of simplicity, only the differences between the transmission 3700 and other embodiments previously described will be noted. The pivot supports 134A, 134B, 134C, when shifted toward high cause the pivot support legs 3730 that are attached to pivot supports to 134A, 134B, 134C, to contact and push the first thrust washer 2006 toward the drive side of the transmission 3700. The movement of the first thrust washer 2006 causes both the first thrust bearing 1106 and the support member 154 to be pushed toward the stationary support 152. The tension inducer 2018 prevents the support member 154 from moving too far and when the transmission 3700 is shifted toward low, causes the support member 154 to be pushed toward the pivot support legs 3730.

The present invention provides a novel transmission which provides a continuously variable input/output angular velocity ratio offering up to a 900% range of input/output angular velocity. Further, the transmission can be actuated either manually or automatically.

Further, the transmission of the invention provides a simple design which requires a minimal number of parts to implement, and is therefore simple to manufacture, compact, light and produces very little friction. The transmission eliminates duplicate, overlapping, or unusable gears which are found in geared transmissions. The transmission eliminates the need for clutches which are traditionally used for changing gears. Lastly, the transmission can save energy or gasoline by providing an ideal input to output angular speed ratio.

## Claims

1. A transmission comprising:
a shaft (102);
a rotatable driving member (120) rotatably mounted on the shaft (102);
a rotatable driven member (170) rotatably mounted on the shaft (102);
a plurality of spherical power adjusters (122A, 122B. 122C), each of the spherical power adjusters having a central bore (128A, 128B, 128C), and each of the spherical power adjusters rotatable about an axis of rotation that is defined by the bore; and
a plurality of spindles, (130A, 130B, 130C) each of the spindles being inserted through one of the bores;
**characterized in that**
a rotatable substantially cylindrical support member (154) is located concentrically over the shaft and is capable of axial movement, the support member being in frictional contact with each of the power adjusters each spindle being operably connected to the support member, and
the axis of rotation of each power adjuster (122A, 122B, 122C) is capable of being adjusted substantially simultaneously and equally in response to axial movement of the rotatable support member (154).

2. The transmission of Claim 1, further comprising two bearings (1106, 1108) and two planar platforms (1102, 1104), one of the bearings and one of the planar platforms positioned on each end of the rotatable support member so that each bearing is between one of the planar platforms and one end the rotatable support member.

3. The transmission of Claim 2, wherein the two bearings (1106, 1108) and the two planar platforms (1102, 1104) are capable of axial movement, the rotatable support member moving axially in response to the axial movement of the two bearing and the two planar platforms.

4. The transmission of Claim 3, further comprising a plurality of legs (135, 137), at least one leg for each spindle, the legs operably connecting the spindles to at least one of the planar platforms (1102, 1104).

5. The transmission of Claim 4, further comprising a shifting member (160), at least a portion of the shaft (102) being hollow, the shifting member positioned at least in part inside the hallow portion of the shaft (102), wherein the shaft comprises an aperture (165) allowing the shifting member to be operably connected to at least one the planar platforms.

6. The transmission of Claim 5, wherein the shifting member (160) is capable of axial movement, and wherein the rotatable support member (154), the two bearings (1106, 1108) and the two planar platforms (1102, 1104) move axially in direct response to the axial movement of the shifting member (160).

7. The transmission of Claim 3, further comprising a plurality of legs, two of the legs respectively supporting at least in Part each or the spindles (130A, 130B, 130C), the legs operably connecting the spindles to the rotatable support member (154).

8. The transmission of Claim 1, additionally comprising:
two bearings (1106, 1108) each of the bearings coaxially mounted to the shaft (102) a first of the bearings in frictional contact with a first end or the support member (154); a second or the hearings in frictional contact with a second and of the support member (154); and
two planar platforms (1102, 1104) are each fixedly attached to the shaft (102), wherein a first of the planar platforms and the first end of the rotatable support member each provides a racing surface for the first of the two bearings, wherein a second of the planar platforms and the second end of the rotatable support member each provides a racing surface for the second of the two bearings.

9. The transmission of Claim 8 wherein upon axial movement of the rotatable support member (154), the two hearings (1106, 1108) and the two planar platforms (1102, 1104), plurality of legs (171A, 171B, 171C) are engaged thereby causing the spindles to adjust the axis of rotation of the power adjusters substantially equally and simultaneously.

10. The transmission of Claim 1, further comprising:
at least one outwardly extendable weight (720A, 720B, 720C) connected to at least one of the spindles (130A, 130B, 130C); and
at least one flexible tension member (708A, 708B, 708C) operably connecting the at least one weight to at least one of the spindles.

## Patentansprüche

1. Übersetzungsgetriebe, welches aufweist:
eine Welle (102),
ein drehbares Antriebsteil (120), welches auf der Welle (102) drehbar montiert ist,
ein drehbares angetriebenes Teil (170), welches auf der Welle (102) drehbar montiert ist,
eine Mehrzahl kugelförmiger Antriebskrafteinstellmittel (122A, 122B, 122C), wobei jedes der kugelförmigen Antriebskrafteinstellmittel eine zentrale Bohrung (128A, 128B, 128C) aufweist und wobei jedes der kugelförmigen Antriebskrafteinstellmittel um eine Rotationsachse drehbar ist, die durch die Bohrung definiert wird, und
eine Mehrzahl von Spindeln (130A, 130B, 130C), wobei jede der Spindeln durch eine der Bohrungen hindurchgeführt ist,
**dadurch gekennzeichnet, daß**
ein drehbares, im wesentlichen zylindrisches Halteteil (154) konzentrisch auf der Welle angeordnet und axial bewegbar ist, wobei das Halteteil in Reibeingriff mit jedem der Antriebskrafteinstellmittel steht und jede Spindel mit dem Halteteil funktionell verbunden ist, und
die Drehachse jedes der Antriebskrafteinstellmittel (122A, 122B, 122C) im wesentlichen gleichzeitig und gleichermaßen in Reaktion auf eine axiale Bewegung des drehbaren Halteteils (154) einstellbar ist.

2. Übersetzungsgetriebe nach Anspruch 1, welches weiterhin zwei Lager (1106, 1108) und zwei ebene Plattformen bzw. Scheiben (1102, 1104) aufweist, wobei eines der Lager und eine der ebenen Plattformen an je einem Ende des drehbaren Halteteils angeordnet ist, so daß jedes Lager sich zwischen einer der ebenen Plattformen und einem Ende des drehbaren Halteteils befindet.

3. Übersetzungsgetriebe nach Anspruch 2, wobei die beiden Lager (1106,1108) und die beiden ebenen Plattformen (1102, 1104) zu einer axialen Bewegung in der Lage sind, wobei das drehbare Halteteil sich in Reaktion auf die axiale Bewegung der beiden Lager und der beiden ebenen Plattformen in axialer Richtung bewegt.

4. Übersetzungsgetriebe nach Anspruch 3, welches weiterhin eine Mehrzahl von Schenkeln (135, 136), zumindest einen Schenkel für jede Spindel, aufweist, wobei die Schenkel die Spindel funktionell mit zumindest einer der ebenen Plattformen (1102, 1104) verbinden.

5. Übersetzungsgetriebe nach Anspruch 4, welches weiterhin ein Schiebeteil (160) aufweist, wobei zumindest ein Abschnitt der Welle (102) hohl ist, das Schiebeteil zumindest teilweise innerhalb des hohlen Abschnitts der Welle (102) angeordnet ist, wobei die Welle eine Öffnung (185) aufweist, die es ermöglicht, daß das Schiebeteil funktionell mit zumindest einer der ebenen Plattformen bzw. Scheiben verbunden wird.

6. Übersetzungsgetriebe nach Anspruch 5, wobei das Schiebeteil (160) axial bewegbar ist und wobei das drehbare Halteteil (154), die beiden Lager (1106, 1108) und die beiden ebenen Plattformen (1102, 1104) sich in direkter Reaktion auf die axiale Bewegung des Schiebeteils (160) in axialer Richtung bewegen.

7. Übersetzungsgetriebe nach Anspruch 3, welches weiterhin eine Mehrzahl von Schenkeln aufweist, wobei zwei der Schenkel jeweils zumindest teilweise jede der Spindeln (130A, 130B, 130C) haltern, wobei die Schenkel die Spindeln mit dem drehbaren Halteteil (154) wirksam verbinden.

8. Übersetzungsgetriebe nach Anspruch 1, welches außerdem aufweist:
zwei Lager (1106, 1108), wobei jedes der Lager koaxial an der Welle (102) eines ersten der Lager in Reibkontakt mit einem ersten Ende des Halteteils (154) montiert ist, und ein zweites der Lager in Reibkontakt mit einem zweiten Ende des Halteteils (154) in Reibkontakt steht, und
zwei ebene Plattformen (1102, 1104) jeweils an der Welle (102) fest angebracht sind, wobei eine erste der ebenen Plattformen an dem ersten Ende des drehbaren Halteteils jeweils eine Lauffläche für das erste der beiden Bahnen bereitstellt, wobei eine zweite der ebenen Plattformen und das zweite Ende des drehbaren Halteteils jeweils eine Lauffläche für die zweiten der beiden Lager bereitstellt.

9. Übersetzungsgetriebe nach Anspruch 8, wobei im Fall einer axialen Bewegung des drehbaren Halteteils (154) die beiden Lager (1106, 1108) und die beiden ebenen Plattformen (1102, 1104) und eine Mehrzahl von Schenkeln (171A, 171B, 171C) in Eingriff stehen und **dadurch** bewirken, daß die Spindeln die Drehachse der Antriebskrafteinstellmittel im wesentlichen gleich und gleichzeitig einstellen.

10. Übersetzungsgetriebe nach Anspruch 1, welches weiterhin aufweist:
zumindest ein nach außen verlängerbares Gewicht (720A, 720B, 720C), welches funktionell mit zumindest einer der Spindeln (130A, 130B, 130C) verbunden ist, und zumindest ein flexibles Spannungsteils (708A, 708B, 708C), welches das zumindest eine Gewicht mit zumindest einer der Spindeln funktionell verbindet.

## Revendications

1. Transmission comportant :
un arbre (102) ;
un élément rotatif menant (120) monté de façon à pouvoir tourner sur l'arbre (102) ;
un élément rotatif mené (170) monté de façon à pouvoir tourner sur l'arbre (102) ;
de multiples régleurs sphériques (122A, 122B, 122C) de puissance, chacun des régleurs sphériques de puissance ayant un alésage central (128A, 128B, 128C), et chacun des régleurs sphériques de puissance pouvant tourner autour d'un axe de rotation qui est définit par l'alésage ; et
de multiples broches (130A, 130B, 130C), chacune des broches étant insérée dans l'un des alésages ;
**caractérisée en ce que**
un élément rotatif sensiblement cylindrique (154) de support est placé concentriquement au-dessus de l'arbre et est capable d'un mouvement axial, l'élément de support étant en contact de frottement avec chacun des régleurs de puissance, chaque broche étant reliée fonctionnellement à l'élément de support, et
l'axe de rotation de chaque régleur de puissance (122A, 122B, 122C) peut être ajusté sensiblement simultanément et de façon égale en réponse à un mouvement axial de l'élément rotatif (154) de support.

2. Transmission selon la revendication 1, comportant en outre deux paliers (1106, 1108) et deux plateaux plans (1102, 1104), l'un des paliers et l'un des plateaux plans étant positionnés sur chaque extrémité de l'élément rotatif de support afin que chaque palier se trouve entre l'un des plateaux plans et une extrémité de l'élément rotatif de support.

3. Transmission selon la revendication 2, dans laquelle les deux paliers (1106, 1108) et les deux plateaux plans (1102, 1104) sont capables d'un mouvement axial, l'élément rotatif de support se déplaçant axialement en réponse au mouvement axial des deux paliers et des deux plateaux plans.

4. Transmission selon la revendication 3, comportant en outre de multiples branches (135, 137), au moins une branche pour chaque broche, les branches reliant fonctionnellement les broches à au moins l'un des plateaux plans (1102, 1104).

5. Transmission selon la revendication 4, comportant en outre un élément de translation (160), au moins une partie de l'arbre (102) étant creuse, l'élément de translation étant positionné au moins en partie à l'intérieur de la partie creuse de l'arbre (102), l'arbre présentant une ouverture (165) permettant à l'élément de translation d'être relié fonctionnellement à au moins l'un des plateaux plans.

6. Transmission selon la revendication 5, dans laquelle l'élément de translation (160) est capable d'un mouvement axial, et dans laquelle l'élément rotatif (154) de support, les deux paliers (1106, 1108) et les deux plateaux plans (1102, 1104) se déplacent axialement en réponse directe au mouvement axial de l'élément de translation (160).

7. Transmission selon la revendication 3, comportant en outre plusieurs branches, deux des branches supportant respectivement au moins en partie chacune des broches (130A, 130B, 130C), les branches reliant fonctionnellement les broches à l'élément rotatif (154) de support.

8. Transmission selon la revendication 1, comportant en outre :
deux paliers (1106, 1108), chacun des paliers étant monté coaxialement sur l'arbre (102), un premier des paliers étant en contact de frottement avec une première extrémité de l'élément de support (154), un second des paliers étant en contact de frottement avec une seconde extrémité de l'élément de support (154) ; et
deux plateaux plans (1102, 1104) sont reliés chacun fixement à l'arbre (102), un premier des plateaux plans et la première extrémité de l'élément rotatif de support formant chacun une surface de déplacement pour le premier des deux paliers, un second des plateaux plans et la seconde extrémité de l'élément rotatif de support formant chacun une surface de déplacement pour le second des deux paliers.

9. Transmission selon la revendication 8, dans laquelle, lors d'un mouvement axial de l'élément rotatif de support (154), des deux paliers (1106, 1108) et des deux plateaux plans (1102, 1104), de multiples branches (171A, 171B, 171C) sont engagées, amenant ainsi les broches à régler l'axe de rotation des régleurs de puissance de façon sensiblement égale et simultanée.

10. Transmission selon la revendication 1, comportant en outre :
au moins une masse (720A, 720B, 720C) pouvant être étendue vers l'extérieur, reliée fonctionnellement à au moins l'une des broches (130A, 130B, 130C) ; et
au moins un élément flexible de traction (708A, 708B, 708C) reliant fonctionnellement la, au moins une, masse à au moins l'une des broches.
